# EUROPEAN PATENT APPLICATION

(11) **EP 2 665 079 A1**
(43) Date of publication of application: **20.11.2013**
(21) Application number: 12003826.0
(22) Date of filing: 15.05.2012
(51) Int. Cl.: H01H 33/662

(54) **Shielding element for use in medium voltage switchgears, and method for manufacture the same**

(71) Applicant: ABB Technology AG, 8050 Zürich (CH)
(72) Inventor: Shang, Wenkai, Dr.-Ing., 40878 Ratingen (DE); Gentsch, Dietmar, Dr.-Ing., 40882 Ratingen (DE)
(74) Representative: Schmidt, Karl Michael

(57) **Abstract**

The invention relates to a shielding element for the use in medium voltage switchgears with vacuum interrupters with at least two contacts, which are movable along a switching path between closed and open contact position, wherein the shielding element is positioned around the contact position region in the vacuum interrupter, and a method of making the same, according to the preamble of claims 1 and 7.

In order to reduce the use of material, and to optimize sametime the energy absorbance behavoir of the shielding, the invention is, that at least the inner surface of the shielding is applied with a topographic structure in that way, that the structure is aligned parallel to the switching path of the contacts.

## Description

The invention relates to a shielding element for the use in medium voltage switchgears with vacuum interrupters with at least two contacts, which are movable along a switching path between closed and open contact position, wherein the shielding element is positioned around the contact position region in the vacuum interrupter, and a method of making the same, according to claims 1 and 8.

Vacuum interrupters are in use with inner shielding elements, surrounding the contact position in closed and opened position.

By using profiled shielding for vacuum interrupters, it is possible to absorb more metal vapour for vacuum interrupters during switching, therefore could increase the interrupting capability as known form the DE 19503347 A1.

Up to now if the profiled shielding is used then the profile is tangential to the axial of shielding and need to be made by maching as mentioned in this DE 19503347 A1. The profile is tangential to the shielding, therefore the production method can only use the machining, The wall thickness for the shielding has to be thick, in order to spend enough bulk material to get a profiled shielding after machining.

It is an object of the invention, to reduce the use of material, and to optimize sametime the energy absorbance behavior of the shielding.

Basical feature of the invention is, that at least the inner surface of the shielding is applied with a topographic structure in that way, that the structure is aligned parallel to the switching path of the contacts.

In an advantageous embodiment the structure is an alignment of parallel groovings. This causes an optimal "folding" of the surface in sense of an extension of the surface for absortion of energy.

In advantageous embodiment the cross section of the groovings alignment is in Z-structure with sharp edges.

An alternative is, that the cross section of the groovings alignment is in wave-structure with round edges.

A further alternative is, that the cross section of the groovings alignment is in U-structure with sharp edges.

All these topographic structures can be easy manufactured by deep drawing, because of its orientation.

A further additional feature is, that in case of a sectionized shielding arrangement, at least the regions nearest to the contact positions are structured in the aforesaid way.

Additionally to the topographic structurizing of the shielding, each contact is mounted on a stem, and at least partial regions near to the contact piece are additionally applied with topographic surface structures, in order to absorb energy from light arc occurance.

A further advantageous embodiment is, that also the backside of the electrodes, and/or the shielding plate, and/or the inner side of the end cover are additionally applied with the aforesaid topography structure, in order to absorb the energy and vapour from arc.

According to a method for manufacture of a shielding element, the basical invention related feature is, that the shielding consist of at least one or more segments, which are manufactured as contured cylindric elements, and that the topographic structure is applied by deep drawing in the direction along the cylinder-long-axis of the shielding.

In this invention the profile is in the axial direction of shielding, therefore the profile could be made by using deep drawing or protrusion during the production proces, thin wall shielding could be also used, therefore with cost effective production for profiled shielding.

The basic is clear to increase the condensation surface of the metal vapour and the difference to above mentioned application are follows:
1. The profile is in the axial direction to the shielding axis in parallel to the swictching path axis.
2. The production method by the new suggestion could be made by using deep drawing and protrusion process. This is completely contrary to the above mentioned state of the art, in which the profile can only be made by machining.
3. By using this methode the manufacture of shielding for "normal" vacuum interrupter without increase of costs for the vacuum interrupter and more secure for the performance of vacuum interrupters.
4. This could be also for different materials, Cu, Cu/Cr, and Cu alloys.

An example of the profile are shown in the following picture: surely other kind of profile as in above mentioned patent application could be also used, so far they are oriented in the same way, parallel to the switching path axis of the contacts, so that the profile can be introduced into the inner shielding surface by deep drawing

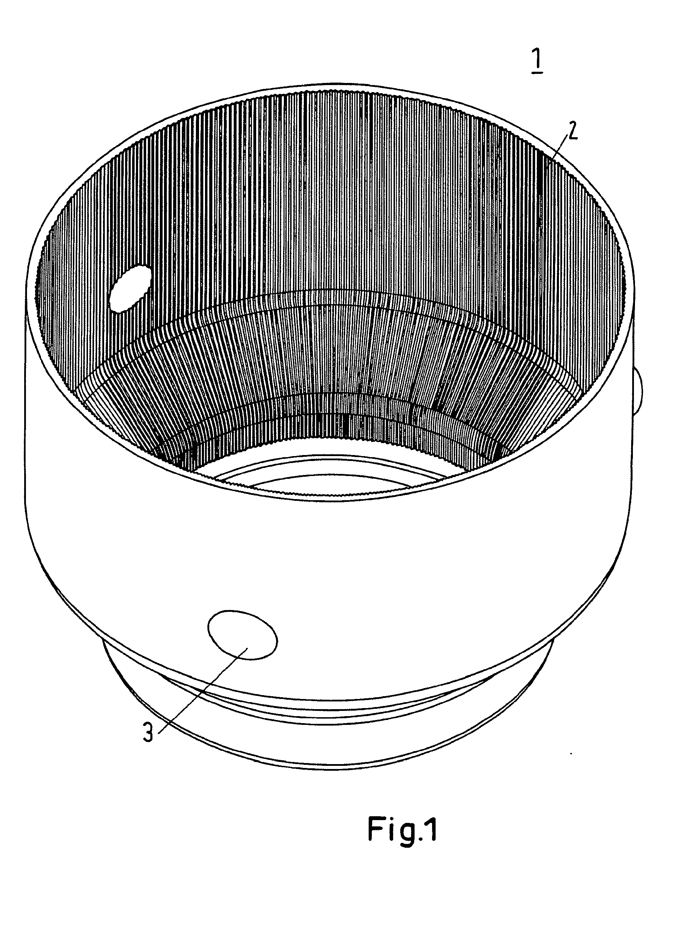

Figure 1 shows a perspective view of the shielding element 1, which has the form of a contured cylinder. The basical feature which is completely different to the aforesaid state of the art is, that the topographic structure 2 is implemented as parallel allinged grooves. The orientation are consequently parallel to the contact movement axis.

Furthermore the shielding element is applied with some dimples 3, in order to position them inside the vacuum interrupter.

Figure 2 , Figure 3, and Figure 4 show different embodiments groove cross sections, according to the threee alternatives in the dependant claims. Figure 2 shows a structure with rectangular cross section 22 of the grooves with a flat outer line 23.

Figure 3 shows a waved structure with rounded inner structure 24 of the grooves, and a rounded edge 25 on top.

Figure 4 shows a sharp edged structure of the cross section of the grooves with a rectangular v-shaped structure 28, sharp edges 29 on top and sharp edged baselines 27 of the grooves.

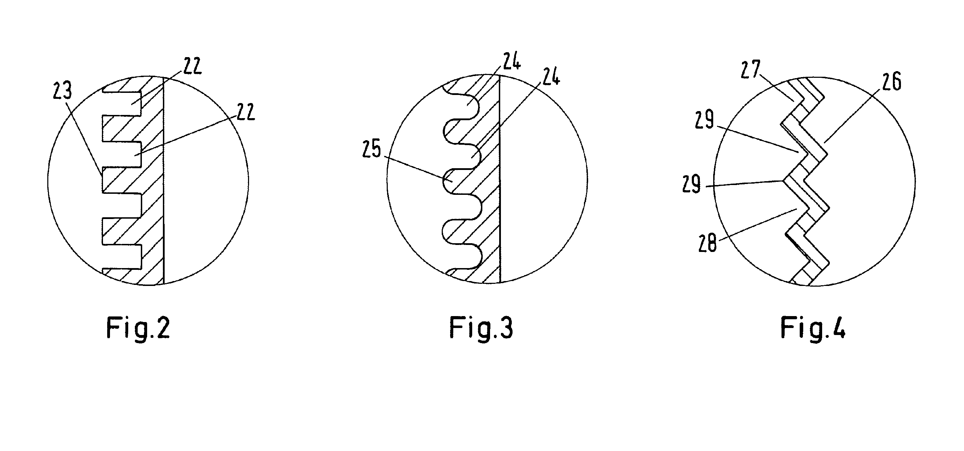

Important is, that also the back side of the Shielding is not flat, like in figure 2 or 3, but also shaped with a structure 26 in the same way as on top.

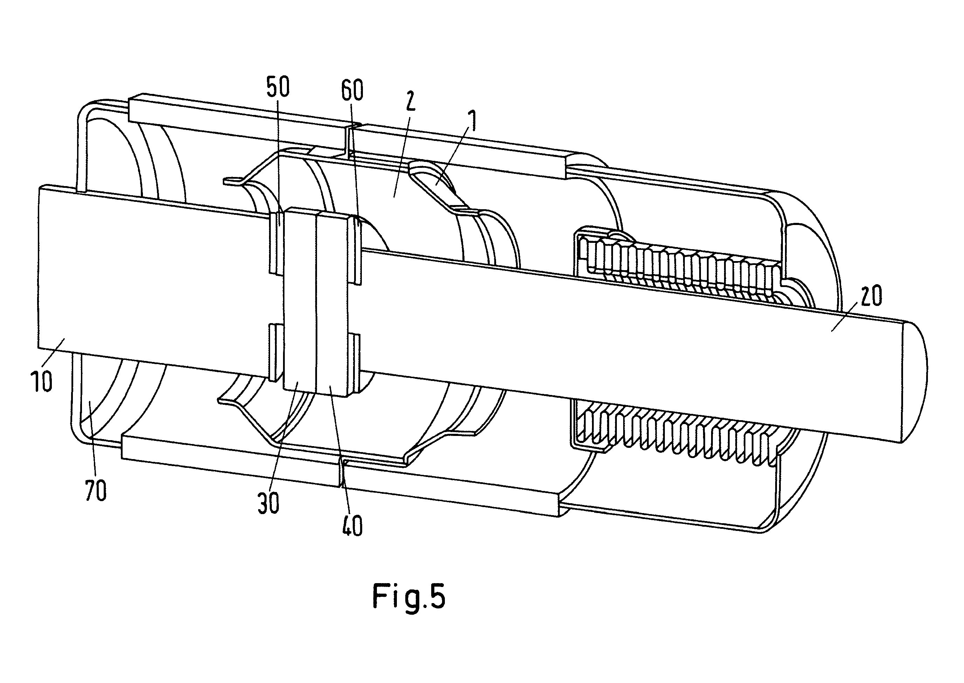

Figure 5 shows a perspective view into a vacuum interrupter 1, wherein the region of the stems 10 and 20 near to the contact pieces and/or the shielding plate 50, 60 and/or the backside of the contact pieces and/or the the inner side of the end covers 70 can be structured at least partly, in order, to result in the same function of high absorbance of energy.

### Position numbers

- 1: shielding element
- 2: topographic structure
- 3: dimples
- 10: stem
- 20: stem
- 22: rectangular cross section
- 23: flat outer line
- 24: rounded inner structures
- 25: round edge on top
- 26: structure
- 27: sharp edged baselines
- 28: rectangular V-shaped structure
- 29: sharp edges on top
- 30: contact piece
- 40: contact piece
- 50: shielding plate
- 60: shielding plate
- 70: end cover

## Claims

1. Shielding element for the use in medium voltage switchgears with vacuum interrupters with at least two contacts, which are movable along a switching path between closed and open contact position, wherein the shielding element is positioned around the contact position region in the vacuum interrupter,
**characterized in**
**that** at least the inner surface of the shielding is applied with a topographic structure in that way, that the structure is aligned parallel to the switching path of the contacts.

2. Shielding element according to claim 1,
**characterized in**
**that** the structure is an alignment of parallel groovings.

3. Shielding element according to claim 2,
**characterized in**
**that** the cross section of the groovings alignment is in z-structure with sharp edges.

4. Shielding element according to claim 2,
**characterized in**
**that** the cross section of the groovings alignment is in wave-structure with round edges.

5. Shielding element according to claim 2,
**characterized in**
**that** the cross section of the groovings alignment is in u-structure with sharp edges.

6. Shielding element according to one of the aforesaid claim 1 to 5, **characterized in**
**that** in case of a sectionized shielding arrangement, at least the regions nearest to the contact positions are structured in the aforesaid way.

7. Shielding element according to one of the aforesaid claim 1 to 5, **characterized in**
**that** each contact is mounted on a stem, and that at least partial regions near to the contact piece are additionally applied with topographic surface structures, in order to absorb energy from light arc occurance.

8. Shielding element according to one of the aforesaid claims, **characterized in**
**that** also the backside of the electrodes, and/or the shielding plate, and/or the inner side of the end cover are additionally applied with the aforesaid topography structure, in order to absorb the energy and vapour from arc.

9. Method for manufacture of a shielding element like described in one of the aforesaid claims 1 to 8,
**characterized in**
**that** the shielding consist of at least one or more segments, which are manufactured as contured cylindric elements, and that the topographic structure is applied by deep drawing in the direction along the cylinder-long-axis of the shielding.
